# EUROPÄISCHE PATENTSCHRIFT

(11) **EP 0 768 328 B1**
(45) Veröffentlichungstag und Bekanntmachung des Hinweises auf die Patenterteilung: **05.02.2003**
(21) Anmeldenummer: 96116360.7
(22) Anmeldetag: 11.10.1996
(51) Int. Cl.: C08G 63/60, C09D 175/06, C08G 63/20, C08G 18/08, C08G 18/42

(54) **Wasserverdünnbarer Polyester**
Water-dispersable polyesters
Polyesters pouvant se disperser dans l'eau

(30) Priorität: 13.10.1995 DE 19538061
(43) Veröffentlichungstag der Anmeldung: 16.04.1997
(73) Patentinhaber: BASF Coatings Aktiengesellschaft, 48165 Münster (DE)
(72) Erfinder: Hartung, Michael, 59590 Geseke (DE); Budde, Jörg, 48167 Münster (DE); Poth, Ulrich, 48163 Münster (DE)
(74) Vertreter: Fitzner, Uwe, Dr.

(56) Entgegenhaltungen:
- EP-A- 0 537 568
- EP-A- 0 583 728
- DE-A- 2 824 418
- US-A- 5 334 690

## Beschreibung

Die der vorliegenden Erfindung zugrundliegende Aufgabenstellung liegt in der Bereitstellung von wasserverdünnbaren Polymerdispersionen aus denen wäßrige Lacke herstellbar sind, die die oben beschriebenen Nachteile nicht aufweisen. Insbesondere soll ein emissionsarmes Klarlacksystem zur Verfügung gestellt werden, das mit den bei der Automobilserienlackierung gebräuchlichen Applikationsverfahren verarbeitet und bei relativ niedrigen Temperaturen vernetzt werden kann sowie mit den verschiedensten Basislacken verträglich ist. Der Klarlack soll den Forderungen der Automobilhersteller nach hoher Oberflächengüte (Glanz, Verlauf, Glätte, Fülle und Effekt), Polierfähigkeit und der Beständigkeit gegen chemische Agenzien, atmosphärische Einflüsse, Bewitterung und mechanische Einflüsse entsprechen und so elastisch sein, daß er auch auf Kunststoffen als Substraten eingesetzt werden kann.

Diese Aufgabe wird durch einen wasserverdünnbaren Polyester gelöst, enthaltend a) mindestens 25 Mol-% cycloaliphatische Bausteine, vorzugsweise 30 bis 50 Mol-%, b) bis zu 20 Mol-% aromatische Bausteine, vorzugsweise 10 bis 15 Mol-%, c) wenigstens 30 Mol-%, vorzugsweise 35 bis 50 Mol-% aliphatische Diole mit einer Anzahl von C-Atomen ≥ 4 und d) wenigstens 20 Mol-%, vorzugsweise 25 bis 40 Mol-% an Polyolen, die verzweigte aliphatische Ketten enthalten.

Beispiele für erfindungsgemäß einsetzbare cycloaliphatische Bausteine sind Polycarbonsäuren (Hexahydrophthalsäure, 1,4-Cyclohexandicarbonsäure, 1,3-Cyclohexandicarbonsäure, Tetrahydrophthalsäure, Endomethylentetrahydrophthalsäure, Dihydrodicyclopentadiendicarbonsäure bzw. ihre Derivate wie Anhydride oder Ester niedrigmolekularer Monoalkohole wie Methanol) und Polyalkohole (1,4-Dimethylolcyclohexan, 1,1-Dimethylolcyclohexan, 1,4-Cyclohexandiol, 2,2-(Bishydroxymethyl)-norbonan, 2,3-(Bishydroxymethyl)-norbonan, 2,5-(Bishydroxymethyl)-norbonan, 2,6-(Bishydroxymethyl)-norbonan).

Einsetzbare aromatische Bausteine sind z.B. Polycarbonsäuren: o-Phthalsäure, Isophthalsäure, Terephthalsäure, Trimellithsäure, Trimesinsäure, Pyromellithsäure, Naphthalindicarbonsäuren bzw. ihre Derivate wie Anhydride oder Ester niedrigmolekularer Monoalkohole wie Methanol; sowie Monocarbonsäure: Benzoesäure, para-tert.-Butylbenzoesäure.

Als aliphatische Diole kommen Butandiol-1,4, Butandiol-1,3, Hexandiol-1,6, Diethylenglykol, Dipropylenglykol, Nonandiol und seine Isomeren, 2,2-Dimethylpropandiol-1,3, 2,2-Methylpropylpropandiol-1,3, 2,2-Methylbutylpropandiol-1,3, Monoester aus 3-Hydroxy-2,2-dimethylpropionsäure und 2,2-Dimethylpropandiol-1,3 in Betracht.

Diese Verbindungen werden auch als Polyole, die verzweigte aliphatische Ketten enthalten, eingesetzt.

Besonders bevorzugt sind 2,2-Dimethylpropandiol-1,3, 2,2-Methylpropylpropandiol-1,3, Monoester aus 3-Hydroxy-2,2-dimethylpropionsäure und 2,2-Dimethylpropandiol-1,3.

Die Säurezahlen der Polyester liegen vorzugsweise bei 20 bis 100, besonders bevorzugt 25 bis 55, wobei die Säuregruppe aus einer mindestens trifunktionellen Polycarbonsäure oder Hydroxycarbonsäure gebildet wird in der Weise, daß statistisch die funktionellen Gruppen der Polycarbonsäure oder der Hydroxycarbonsäure bis auf eine Carboxylgruppe in das Polyestermolekül einreagiert sind (TMS-diester, DMPA-diester).

Vorzugsweise werden Diester der Trimellithsäure, Trimesinsäure, Triester der Pyrromellithsäure eingesetzt, die mit den obengenannten Diolen im Polyesterverbund eingebaut sind; Diester der 2,2-Dimethylolpropionsäure.

Bevorzugte OH-Zahlen liegen bei 90 bis 200, besonders bevorzugt 100 bis 150.

Die erfindungsgemäßen Polyester weisen Molmassen von 800 bis 3000, besonders bevorzugt 1200 bis 2000, angegeben als Zahlenmittel berechnet aus der molaren Zusammensetzung und dem Kondensationsgrad. Der Polyester weist Verzweigungsstellen von 0,5 bis 1,8, bevorzugt 0,6 bis 1,2 Mol pro 1000 g Polyester berechnet ohne die seitenständigen COOH-Gruppen auf..

Als Polyole sind dementsprechend einsetzbar Glycerin, Trimethylolpropan, Trimethylolethan, Trishydroxyethylisocyanurat. Die bevorzugten Polycarbonsäureester sind Triester von Trimellithsäure oder Trimesinsäure mit den obengenannten Diolen, bzw. die entsprechenden Tetraester von Pyrromellithsäure.

Die erfindungsgemäß bereitgestellten wasserverdünnbaren Polyester sind herstellbar, indem die Bausteine der Polyester bei höheren Temperaturen in der Schmelze zur Veresterung gebracht werden. Es wird dabei bevorzugt ein zweistufiges Veresterungsverfahren angewendet. Es werden die üblichen für Kondensationsreaktionen verwendeten Reaktoren eingesetzt.

Die erfindungsgemäßen wasserverdünnbaren Polyester können zur Herstellung von wäßrigen Lacken verwendet werden. Die die erfindungsgemäßen Polyesterdispersionen enthaltenden wäßrigen Lacke enthalten als Vernetzungsmittel ein Polyisocyanat. Hierfür kommen insbesondere oligomere Polyisocyanate in Betracht.

Beispiele hierfür sind Isocyanurattrimeres des Hexamethylendiisocyanat, Biurettrimeres des Hexamethylendiisocyanates, Dimeres Allophanat aus Hexamethylendiisocyanat und einem Monoalkohol, die entsprechenden Verbindungen aus Isophorondiisocyanat, Mischungen der genannten Verbindungen, Modifikationen der genannten Verbindungen mit Polyethern und/oder Uretdionen oder Carbodiimiden (davon sind Produkte am Markt erhältlich).

Vernetzungsverhältnis von Molen freier NCO-Gruppen bezogen auf die Mole der OH-Gruppen des Polyesters beträgt 0,9 bis 1,6, bevorzugt 1,0 bis 1,3.

Die Mischungen der folgenden Substanzen des Klarlacks und der Vernetzer bzw. die Vernetzerlösung können als separate Komponenten ausgeliefert werden und sind geeignet vor der Verarbeitung entweder durch Unterrühren von Hand, durch mechanische Rührwerke oder in Zweikomponentenapplikationsanlagen mit der Mischung der übrigen Bestandteile vermengt zu werden und diese Vermengung ist nach diesen einfachen Mischverfahren über einen Zeitraum von max. 3 Stunden optimal applizierbar.

Vorzugsweise werden max. 35 % bezogen auf die nicht flüchtigen Bestandteile des Gesamtsystems mindestens teilweise mit Wasser mischbare Cosolventien aus der Gruppe der Ester, Glykolether und/oder Glykoletherester (die Ester sind dadurch gekennzeichnet, daß die Kohlenstoffketten mindestens ein tertiäres C-Atom enthalten), Pyrrolidone, Amide; wobei mindestens 50 % der Menge der Cosolventien nicht protisch sind und zur Herstellung der Lösung des Polyisocyanatoligomeren und ggf. im Prozeß der Herstellung der sekundären Dispersion des Polyesters eingesetzt werden, verwendet.

Beispiele sind Ethylen-, Diethylen-, Propylen- und Dipropylenglykolmonoether des Methanols, des Ethanols, des n-Propanols, des Isopropanols, des n-Butanols, des Isobutanols, des tert.-Butanols, des Hexanols, des 2-Ethylhexanols und die Ether höhermolekularer Polyether der genannten Polyole, Ester der genannten Polyolmonoether mit Isobuttersäure, Ester der genannten Propylenglykolmonether und ihrer höheren Derivate mit Essigsäure, Propionsäure, Isobuttersäure, 3-Methoxybutanol und seine Ester, N-Methylpyrrolidon, N,N-Dimethylformamid, N,N-Dimethylacetamid.

Der wäßrige Lack enthält ferner Neutralisierungsmittel. Bevorzugt sind 0,6 bis 1,2 Mol bezogen auf die freien Carboxylgruppen des Polyesters an Aminen als Neutralisationsmittel. Besonders bevorzugt sind 0,9 bis 1,1 Mol/COOH.

Als Beispiele sind N,N-Dimethylethanolamin, N,N-Diethylethanolamin, N-Methylmorpholin, Triethylamin, Triethanolamin, Diisopropylamin, 2-Amino-2-methylpropanol zu nennen.

Ferner können die erfindungsgemäßen Lacke Katalysatoren enthalten. Ggf. sind max. 0,3 % bezogen auf die nicht-flüchtigen Bestandteile des Gesamtsystems an Katalysatoren für die Isocyanatvernetzung (geringer flüchtige tert. Amine oder organische Zinnverbindungen) vorhanden.

Hinzu kommen können auch übliche Lichtschutzmittelkombinationen aus bis zu 2 % bezogen auf die nicht-flüchtigen Bestandteile UV-Absorber der Gruppe der Benztriazole, Triazine, Oxanilide oder deren Mischungen und bis zu 1,5 % bezogen auf die nicht-flüchtigen Bestandteile HALS aus der Gruppe der N-substituierten 2,6-Dialkylpiperidine.

Beispiele für Lichtschutzmittel sind UV-Absorber (Benztriazole, Triazine, Oxanilide). Radikalfänger sind sterisch gehinderte Amine: N-substituierte 2,6-Dialkylpiperidine.

Derartige Lichtschutzmittel sind übliche Bestandteile für Klarlacke. Handelsprodukte sind u.a. von den Firmen Ciba (Tinuvin), Sandoz (Sandovur), Cytec (Cyaguard) zu beziehen.

In den Lacken können außer den oben beschriebenen Polyestern zusätzliche Bindemittelkomponenten, die das Applikationsverhalten stützen sollen wie sekundäre oder primäre Acrylatdispersionen, Polyurethandispersionen oder wasserverdünnbare Alkydharze, enthalten sein.

Ggf. können ferner bis max. 5 % bezogen auf die nicht-flüchtigen Bestandteile des Systems an nicht-flüchtigen Polyether (PE,PG, Mischungen und Copolyether) hinzukommen.

Schließlich sind für die erfindungsgemäßen Lacke übliche wasserverträgliche Additive wie Verlaufsmittel, Entschäumer, Rheologiemittel, Oberflächenmittel verwendbar.

Einsetzbare Verlaufsmittel sind z.B. Polyacrylate aliphatischer Acrylsäureester und modifizierte Polysiloxane. Beispiele für Entschäumer sind Tertramethylhexandiol und Fluorierte Alkylester; verwendbare Rheologiemittel sind Polyacrylsäuren. Als einsetzbare Oberflächenmittel sind modifizierte Polysiloxane zu nennen.

Je nach Anwendungszweck der aus den erfindungsgemäß bereitgestellten wasserverdünnbaren Polyesterdispersionen hergestellten Lacke können die Lacke eine Vielzahl weiterer für den jeweiligen Anwendungszweck erforderliche Zusätze enthalten.

Die wäßrigen Lacke, die das in den erfindungsgemäß bereitgestellten wasserverdünnbaren Polyestern enthaltenden Polymerisationsprodukt als Bindemittel enthalten, sind insbesondere zur Herstellung von für die Lackierung von Automobilkarosserien geeigneten wäßrigen Lacken geeignet. Sie können in Verfahren zur Lackierung von Automobilkarosserien, bei denen eine Elektrotauchlackschicht, eine Füllerschicht und eine pigmentierte Lackschicht und eine transparente Decklackschicht übereinander lackiert und in mehreren Einbrennschritten nacheinander eingebrannt werden, verwendet werden. Aus den erfindungsgemäß bereitgestellten wasserverdünnbaren Polyesterdispersionen sind insbesondere transparente wäßrige Lacke herstellbar, die sich ganz besonders gut zur Herstellung der transparenten Decklackschicht in dem oben beschriebenen Verfahren zur Lackierung von Automobilkarosserien eignen.

Die transparenten Lacke weisen den Vorteil auf, daß sie bei der Applikation über verschiedenen Basislacken ohne Beeinträchtigung des Effekts im "Naß-Innen-Naß"-Verfahren (d.h. mit nur geringer Vortrocknung bei Raumtemperatur oder im IRR-Vortrockner bei Wasserbasislacken) für ein gemeinsames Einbrennen der Basislack- und Klarlackschicht beim Temperaturen von 60 bis 130 °C für den Bereich der Automobil-Serienlackierung geeignet sind. Insbesondere sind die Lacke auch für die Beschichtung von Kunststoffsubstraten verwendbar.

Bei Einsatz der erfindungsgemäßen wasserverdünnbaren Polyester hat sich überraschend eine leichte Einarbeitbarkeit der Vernetzer ergeben. Damit ist die Möglichkeit verbunden, verschiedenste Vernetzer zugleich zu verwenden.

Die unter Verwendung der erfindungsgemäßen Polyester hergestellten wäßrigen Lacke zeichnen sich durch eine günstige Verarbeitbarkeit aus. Sie sind vor allem für die Spritzapplikation über vorgetrocknetem Basislack des verschiedensten Typs auf Wasserbasislacken geeignet.

Wenn auch der bevorzugte Einsatzbereich die Verwendung in Klarlacken ist, können mit den erfindungsgemäßen Polyestern auch pigmentierte Lacke hergestellt werden. Demgemäß können die erfindungsgemäßen Lacke zur Lackierung von Automobilkarosserien, bei denen eine Elektrotauchlackschicht, eine Füllerschicht und eine einschichtige, pigmentierte Decklackschicht oder eine aus einer pigmentierten Basislackschicht und einer transparenten Decklackschicht bestehende, zweischichtige Decklackierung übereinanderlackiert und in mehreren Einbrennschritten nacheinander eingebrannt werden, zur Herstellung der Füllerschicht, der einschichtigen, pigmentierten Decklackschicht, der pigmentierten Basislackschicht oder der transparenten Decklackschicht eingesetzt werden.

In aller Allgemeinheit ist ein erfindungsgemäßer Polyester auf folgendem Wege erhältlich. In einer ersten Veresterungsverfahrensstufe wird eine erste Teilmenge der Säuregruppenhaltigen Bausteine mit weniger als 3 Carboxylgruppen, beispielsweise der cycloaliphatischen Bausteine, mit den Diolen und den Polyolen verestert bei Temperaturen im Bereich 100°C bis 250°C, vorzugsweise im Bereich von 150°C bis 220°C (ggf. unter Zuhilfenahme eines Schleppmittels). Hierbei wird die Säurezahl überwacht und die Veresterung bis zum Erreichen einer vorgegeben Säurezahl vorangetrieben. Der vorgegebene Wert der Säurezahl liegt beispielsweise zwischen 5 und 50, bevorzugt zwischen 12 und 17. Nach Erreichen dieser vorgegebenen Säurezahl wird das Produkt aus der ersten Veresterungsverfahrenstufe mit einer zweiten Teilmenge der säuregruppenhaltigen Bausteine, nämlich der mindestens trifunktionellen Polycarbonsäure oder Hydroxycarbonsäure (bzw. deren Anhydrid), in einer zweiten Veresterungsverfahrensstufe weiter verestert. In dieser zweiten Veresterungsverfahrensstufe wird solange verestert, bis die Säurezahl deutlich über der vorgegebenen Säurezahl aus der ersten Veresterungsverfahrenstufe liegt (im Ergebnis beispielsweise im Bereich von 25 bis 55, vorzugsweise im Bereich von 30 bis 40). Dabei bleibt letztendlich statistisch etwa eine Carboxylgruppe einer beispielsweise trifunktionellen Polycarbonsäure frei, während die anderen Carboxylgruppen in den Polyester eingebaut werden, z.B. teils durch Addition an überschüssige OH-Gruppen des Produktes aus der erster Veresterungsverfahrensstufe, teils mit noch freien Diolen bzw. Polyolen. Anschließend kann auf übliche Weise neutralisiert und weiter verarbeitet werden.

Im folgenden wird die Erfindung unter Bezugnahme auf die Beispiele näher beschrieben:

### Beispiele

### 1. Wasserverdünnbarer Polyester

In ein Reaktionsgefäß aus Edelstahl mit einem Volumen von 4l, ausgestattet mit einem Ankerrührer, einem Thermometer, einer Zuleitung für Schutzgas, mit einer Füllkörperkolonne und Meßstelle für die Kopftemperatur für die Kolonne, mit einem Kondensator nach der Kolonne und einem Wasserabscheider voll Xylol als Vorlage, die so aufgebaut ist, daß überschüssig anfallendes Schleppmittel auf den Kolonnenkopf zurücklaufen kann, werden eingewogen 175 g 1,1,1-Trimethylolpropan; 308 g Hexandiol-1,6; 1064 g Hydroxypivalinsäureneopentylglykolester (Monoester aus 3-Hydroxy-2,2-dimethylpropionsäure und 2,2-Dimethylpropandiol-1,3), 703 g Hexahydrophthalsäureanhydrid und 50 g Xylol als Schleppmittel. Der Inhalt des Reaktor wird schnell unter Rühren und unter Einleitung von Stickstoff als Schutzgas auf 150 °C aufgeheizt. Von 150 °C wird die Temperatur im Reaktor auf maximal 220 °C so gesteigert, daß die Kolonnenkopftemperatur 103 °C nicht übersteigt und das rücklaufendes Schleppmittel den Stoffaustausch in der Kolonne gewährleistet. Das dabei anfallende Reaktionswasser wird regelmäßig abgezogen. Es wird bei 220 °C gehalten bis der Inhalt des Reaktors eine Säurezahl von 14,1 erreicht hat. Dann wird auf unter 160 °C abgekühlt und dann werden 375 g Trimellithsäureanhydrid zugegeben. Der Reaktor wird von der Füllkörperkolonne auf ein Überströmrohr umgestellt und das Reaktionsgemisch wird vorsichtig auf maximal 180 °C aufgeheizt um die Trimellithsäure an die überschüssigen OH-Gruppen der ersten Polyesterstufe zu addieren und statistisch mindestens eine weitere COOH-Gruppe zu verestern. Es wird dazu bei 180 °C gehalten und kondensiert bis eine Säurezahl von 35,4 und eine Viskosität des Polyesters in einer Meßlösung des Reaktionsgemisches von 50 % in Ethylenglykolmono-n-butylester von 140 mPa.s gemessen im ICI-Platte-Kegel-Viskosimeter bei 23 °C erreicht wird. Dann wird schnell auf unter 120 °C abekühlt und das Reaktionsprodukt mit 750 g 1-Methorypropylacetat-2 angelöst, dann werden 127 g Triethylamin zugesetzt und die entstandene Lösung wird in 623 g auf 60 °C aufgewärmtes deionisiertes Wasser abgelassen und darin eingerührt. Das resultierende Produkt besteht aus einer schwach opaken, viskosen Lösung und enthält 61,3 Gew.-% an Polyester (gemessen als nicht-flüchtiger Anteil an einer Probe in einem Umluftofen für 60 min. bei 130 °C) mit einer Säurezahl von 33,5 mg KOH/g, einer Molmasse (Zahlenmittel berechnet aus der Rezeptur und der Säurezahl) von 1161 und einem Verzweigungsgrad von 1,30; 3,0 Gew.-% Triethylamin (0,8 Mol/COOH-Gruppendes Polyesters); 20,0 Gew.-% an 1-Methoxypropylacetat-2 und 15,7 Gew.-% deionisiertem Wasser. Das Produkt ist wasserverdünnbar und wird in einer Klarlackformulierung eingesetzt

### 2. Herstellung eines erfindungsgemäßen Wasser-Klarlacks

Zu 540 g des erfindungsgemäßen Bindemittels werden nachfolgende Mengen unter einem Schnellrührer zugegeben:

| | |
|---|---|
| 20 g | Ethyldiglykol |
| 10 g | Handelsübliche Entschäumer |
| 5 g | Dimethylethanolamin |
| 25 g | Handelsübliches UV-Absorber |
| 10 g | Handelsüblicher Radikalfänger HALS |
| 380 g | Deionisiertes Wasser |

### 3. Pneumatische Lackierung von Kunststoffteilen

Tafeln oder Anbauteile aus Polycarbonatblends werden mit Isopropanol gewaschen und getrocknet. Mit einer Fließbecherpistole wird ein handelsüblicher 2K-Polyurethan-Grundlack für Kunststoffe appliziert und entsprechend bei 80 °C für 30 min. getrocknet. Anschließend wird ein handelsüblicher Metalleffekt-Lack appliziert. Die Trockenfilmschichtdicke des Primers und des Basislackes betragen 30 bzw. 15 µm.

Nach 5 minütiger Trocknung erfolgt nun die Applikation des erfindungsgemäßen Wasserklarlackes. Dieser wird mit einem Isocyanat-Härter (z.B. 20 Teile Desmodur N3300) intensiv mit einem Schnellrührer vermischt. Anschließend werden 20 Teile deion. Wasser untergerührt. Der erfindungsgemäße Wasserklarlack wird mittels einer Fließbecherpistole (Spritzdruck 4-5 bar, 1,2 mm Düse) in 2 Kreuzgängen aufgetragen, so daß eine Trockenfilm-Schichtstärke von 25 bis 30 µm entsteht. Das lackierte Kunststoffteil wird nach 15 minütigem Ablüften bei 90 °C 30 min. in einem Umluftofen getrocknet.

### Technologische Prüfungen

Die lackierten Teile werden 7 Tage bei Raumtemperatur gealtert. Folgende Testergebenisse werden erhalten:

| | |
|---|---|
| Gitterschnitt mit Tesaabriß (DIN 53151) | Wert 0 |
| Dampfstrahltest nach VW | i.O. (keine Abplatzung) |
| Steinschlag nach VW | 0 (keine Abplatzung) |
| Blasen nach 240h Konstantklima | m0/g0 |
| Haftung nach 240h Konstantklima | Wert 0 |

## Patentansprüche

1. Wasserverdünnbarer Polyester mit einer Säurezahl zwischen 20 und 100 mg KOH/g sowie einer OH-Zahl zwischen 90 und 200 mg KOH/g enthaltend
a) mindestens 25 Mol-% cycloaliphatische Bausteine,
b) bis zu 20 Mol-% aromatische Bausteine,
c) wenigstens 30 Mol-% aliphatische Diole mit einer Anzahl von C-Atomen > 4, und
d) wenigstens 20 Mol-% an Polyolen, die verzweigte aliphatische Ketten enthalten.

2. Wasserverdünnbarer Polyester nach Anspruch 1, **dadurch gekennzeichnet, daß** die Säurezahl zwischen 25 und 55 mg KOH/g und die OH-Zahl zwischen 100 bis 150 mg KOH/g liegt.

3. Wasserverdünnbarer Polyester nach Anspruch 1 oder 2, **dadurch gekennzeichnet, daß** eine Säuregruppe aus einer mindestens trifunkionellen Polycarbonsäure oder Hydroxycarbonsäure gebildet wird.

4. Wasserverdünnbarer Polyester nach einem der Ansprüche 1 bis 3, **dadurch gekennzeichnet, daß** der Verzweigungsgrad 0,5 bis 1,8, vorzugsweise 0,6 bis 1,2 Mol/1000 g Polyester berechnet ohne die seitenständigen COOH-Gruppen beträgt.

5. Wasserverdünnbarer Polyester nach einem der Ansprüche 1 bis 4, **dadurch gekennzeichnet, daß** die Molmasse zwischen 800 und 3000, vorzugsweise 1200 und 2000 liegt.

6. Wäßriger Lack enthaltend den wasserverdünnbaren Polyester nach einem der Ansprüche 1 bis 5.

7. Wäßriger Lack nach Anspruch 6, **dadurch gekennzeichnet, daß** er zusätzlich
- Bindemittelkomponenten, vorzugsweise sekundäre oder primäre Acrylatdispersionen, Polyurethandispersionen oder wasserverdünnbare Alkydharze und/oder
- Polyether, vorzugsweise aus Ethylenglykol oder Propylenglykol und deren Mischungen oder Polyether und/oder
- Vernetzer, vorzugsweise oligomere Polyisocyanate und/oder
- Cosolventien, vorzugsweise Ether niedrig- bis höhermolekularer Polyether von Polyolen und/oder
- Neutralisierungsmittel, vorzugsweise Amine und/oder
- Katalysatoren und/oder
- übliche Lichtschutzmittel, Additive, wie Verlautmittel, Entschäumer, Rheologiehilfsmittel und/oder
- Oberflächenmittel enthält.

8. Wäßriger Lack nach Anspruch 7, **dadurch gekennzeichnet, daß** die oligomeren Isocyanate Isocyanuratgruppen, Allophanatgruppen aus Isocyanat und Monoalkohole, Biuretgruppen oder Uretionen oder Mischungen dieser Gruppen enthalten und ggf. mit weiteren mit Isocyanaten reagierenden Komponenten modifiziert sind.

9. Wäßriger Lack nach einem der Ansprüche 7 oder 8, **dadurch gekennzeichnet, daß** das Vernetzungsverhältnis von Molen freier NCO-Gruppen bezogen auf die Mole der OH-Gruppen des Polyesters 0,9 bis 1,6, vorzugsweise 1,0 bis 1,3 beträgt.

10. Verfahren zur Lackierung von Substraten, vorzugsweise Automobilkarosserien, bei dem eine Lackierung bestehend aus einer Elektrotauchlackschicht, einer pigmentierter Basislackschicht und einer transparenten Decklackschicht hergestellt und in mehreren Schritten nacheinander eingebrannt wird, **dadurch gekennzeichnet, daß** zur Herstellung der transparenten Decklackschicht ein wäßriger Lack nach einem der Ansprüche 6 bis 9 eingesetzt wird.

11. Verwendung des Lacks nach einem der Ansprüche 6 bis 9 als transparenter Decklack, vorzugsweise zur Lackierung von mit pigmentierten Lackschichten beschichteten Automobilkarosserien.

## Claims

1. A water-dilutable polyester having an acid number between 20 and 100 mg of KOH/g and an OH number between 90 and 200 mg of KOH/g and comprising
a) at least 25 mol-% of cycloaliphatic structural units,
b) up to 20 mol-% of aromatic structural units,
c) at least 30 mol-% of aliphatic diols having a number of carbon atoms > 4, and
d) at least 20 mol-% of polyols containing branched aliphatic chains.

2. A water-dilutable polyester as claimed in claim 1, wherein the acid number is between 25 and 55 mg of KOH/g and the OH number is from 100 to 150 mg of KOH/g.

3. A water-dilutable polyester as claimed in claim 1 or 2, wherein the acid group is formed from an at least trifunctional polycarboxylic acid or hydroxycarboxylic acid.

4. A water-dilutable polyester as claimed in any of claims 1 to 3, wherein the degree of branching is from 0.5 to 1.8, preferably from 0.6 to 1.2 mol/1000 g of polyester, calculated without the lateral COOH groups.

5. A water-dilutable polyester as claimed in any of claims 1 to 4, wherein the molar mass is between 800 and 3,000, preferably between 1,200 and 2,000.

6. An aqueous coating material comprising the water-dilutable polyester as claimed in any of claims 1 to 5.

7. An aqueous coating material as claimed in claim 6, which additionally comprises
- binder components, preferably secondary or primary acrylate dispersions, polyurethane dispersions or water-dilutable alkyd resins, and/or
- polyethers, preferably of ethylene glycol or propylene glycol and mixtures thereof or polyethers, and/or
- crosslinking agents, preferably oligomeric polyisocyanates, and/or
- cosolvents, preferably ethers of low-molecular mass to relatively high-molecular mass polyethers of polyols, and/or
- neutralizing agents, preferably amines, and/or
- catalysts, and/or
- customary light stabilizers, additives such as leveling agents, antifoams, rheological auxiliaries, and/or
- surface agents.

8. An aqueous coating material as claimed in claim 7, wherein the oligomeric isocyanates comprise isocyanurate groups, allophanate groups of isocyanate and monoalcohols, biuret groups or uretdiones, or mixtures of these groups, and are optionally modified with further components which react with isocyanates.

9. An aqueous coating material as claimed in either of claims 7 and 8, wherein the crosslinking ratio of moles of free NCO groups relative to the moles of the OH groups of the polyester is from 0.9 to 1.6, preferably from 1.0 to 1.3.

10. A process for the coating of substrates, preferably car bodies, in which a coating composed of an electrodeposition coat, a pigmented basecoat and a transparent topcoat is produced and is baked in succession in a plurality of steps, wherein the transparent topcoat is prepared using an aqueous coating material as claimed in any of claims 6 to 9.

11. Use of the coating material as claimed in any of claims 6 to 9 as transparent topcoat, preferably for the coating of car bodies which are coated with pigmented basecoats.

## Revendications

1. Polyester diluable à l'eau, ayant un indice d'acide compris entre 20 et 100 mg de KOH/g ainsi qu'un indice de groupes OH compris entre 90 et 200 mg de KOH/g, contenant
a) au moins 25 % en moles de composants cycloaliphatiques,
b) jusqu'à 20 % en moles de composants aromatiques,
c) au moins 30 % en moles de diols aliphatiques ayant un nombre d'atomes de carbone > 4, et
d) au moins 20 % en moles de polyols, qui contiennent des chaînes aliphatiques ramifiées.

2. Polyester diluable à l'eau selon la revendication 1, **caractérisé en ce que** l'indice d'acide est compris entre 25 et 55 mg de KOH/g et l'indice de groupes OH est compris entre 100 et 150 mg de KOH/g.

3. Polyester diluable à l'eau selon la revendication 1 ou 2, **caractérisé en ce qu'**un groupe acide est formé à partir d'un acide polycarboxylique au moins trifonctionnel ou d'un acide hydroxycarboxylique.

4. Polyester diluable à l'eau selon l'une quelconque des revendications 1 à 3, **caractérisé en ce que** le degré de ramification va de 0,5 à 1,6, de préférence de 1,6 à 1,2 mole/1000 g de polyester, calculé sur les groupes COOH latéraux.

5. Polyester diluable à l'eau selon l'une quelconque des revendications 1 à 4, **caractérisé en ce que** la masse moléculaire est comprise entre 800 et 3 000, de préférence entre 1 200 et 2 000.

6. Peinture à l'eau contenant le polyester diluable à l'eau selon l'une quelconque des revendications 1 à 5.

7. Peinture à l'eau selon la revendication 6, **caractérisée en ce qu'**elle contient en outre
- des composants de type liant, de préférence des dispersions d'acrylate primaire ou secondaire, des dispersions de polyuréthanne ou des résines alkyde diluables à l'eau et/ou
- des polyéthers, de préférence à base d'éthylèneglycol ou de propylèneglycol et de mélanges de ceux-ci, ou des polyéthers et/ou
- des agents de réticulation, de préférence des polyisocyanates oligomères et/ou
- des co-solvants, de préférence des éthers de polyéthers de faible masse moléculaire à masse moléculaire élevée, de polyols et/ou
- des agents de neutralisation, de préférence des aminés et/ou
- des catalyseurs et/ou
- des photoprotecteurs usuels, des additifs tels que des agents d'étalement, des antimousses, des adjuvants de rhéologie et/ou
- des agents tensioactifs.

8. Peinture à l'eau selon la revendication 7, **caractérisée en ce que** les isocyanates oligomères contiennent des groupes isocyanurate, des groupes allophanate à base d'isocyanate et de monoalcools, des groupes biuret ou des uret-diones, ou des mélanges de ces groupes, et sont éventuellement modifiés avec d'autres composants réagissant avec des isocyanates.

9. Peinture à l'eau selon la revendication 7 ou 8, **caractérisée en ce que** le taux de réticulation de moles de groupes NCO libres par rapport au nombre de moles des groupes OH du polyester va de 0,9 à 1,6, de préférence de 1,0 à 1,3.

10. Procédé pour la mise en peinture de subjectiles, de préférence de carrosseries d'automobiles, dans lequel on prépare un revêtement de peinture constitué d'une couche de peinture pour électrodéposition, d'une couche de peinture de base pigmentée et d'une couche de vernis transparent de finition, et on le sèche au four successivement en plusieurs étapes, **caractérisé en ce que**, pour la préparation de la couche de vernis transparent de finition, on utilise une peinture à l'eau selon l'une quelconque des revendications 6 à 9.

11. Utilisation de la peinture selon l'une quelconque des revendications 6 à 9 en tant que vernis transparent de finition, de préférence pour la mise en peinture de carrosseries d'automobiles, revêtues avec des couches de peinture pigmentée.
